Europäisches Patentamt

European Patent Office

Office européen des brevets

(19)

(11) Publication number: 0 342 765
A1

## (12) EUROPEAN PATENT APPLICATION

(21) Application number: 89201283.2

(22) Date of filing: 19.05.89

(51) Int. Cl.⁴: G06F 3/02 , G06F 3/033 , G06F 15/72

(30) Priority: 20.05.88 NL 8801321

(43) Date of publication of application:
23.11.89 Bulletin 89/47

(84) Designated Contracting States:
AT BE CH DE ES FR GB GR IT LI LU NL SE

(71) Applicant: PPG HELLIGE B.V.
I.B.C.-Weg 1
NL-5683 PK Best(NL)

(72) Inventor: Nuijten, Arnoldus Gerardus
Diabolo 5
NL-5683 LA Best(NL)
Inventor: Van Melis, Arnoldus Johan Jacobus
Maria
Nemerlaerhof 270
NL-5709 NR Helmond(NL)
Inventor: Reijers, Johannus Arnoldus
Hendrikus Maria
Touwslagersbaan 5b
NL-5634 AN Batenburg(NL)

(74) Representative: de Bruijn, Leendert C. et al
Nederlandsch Octrooibureau
Scheveningseweg 82 P.O. Box 29720
NL-2502 LS 's-Gravenhage(NL)

(54) System for controlling the display of an image on a display unit.

(57) System for controlling the display of an image on a display unit, whereby an image to be displayed is composed of a number of objects, each consisting of a number of data determining at least a part of the image to be displayed as well as a number of procedures by means of which under control of an application program said data can be created, changed, deleted and supplied in presentable form to a video memory used for controlling the display unit. The system comprises a data memory in which at least a part of the data of those objects, which momentarely result into a presentation on the screen, can be stored, and comprises means, accessible to a user for generating input signals which through a thereto destined process can be supplied to said part of the data of the objects stored in the data memory. In case the input signals are related in a predetermined way to the data in said data memory the respective input signal is used to change to object data in a predetermined manner.

fig-2

## System for controlling the display of an image on a display unit.

The invention relates to a system for controlling the display of a picture on a display unit, whereby an image to be displayed is composed of a number of objects, each consisting of a number of data determining at least a part of the image to be displayed as well as a number of procedures by means of which under control of an application program said data can be created, changed, deleted and supplied in presentable form to a video memory used for controlling the display unit.

The use of object oriented software for controlling the display of an image on a display unit is described by B.J. Cox in "Object Oriented Programming, an Evolutionary Approach", published by Allison Wesley Publication Company. By means of object oriented software the external appearence of an image section is defined, and thereafter a number of parameters of this picture section such as the size, color, intensity, position on the screen, etc. are determined and are stored together with the definition in a memory. Furthermore the object is combined with a number of functions providing the possibility to change or adapt the object parameters, to delete the whole object in case it is not used anymore and to send the object in a presentable form to a video memory used for controlling the display unit.

Where object oriented software is used in the prior art this software is exclusively related to objects having only an output function, in other words objects which can result into a presentation of an image section or a complete picture on the screen of a display unit.

An object of the invention is now to provide a method for inputting data into an object by a user on the basis of the momentarely presented picture on the screen of a display unit.

In agreement with this object the invention now provides a system of the above defined type, which is characterized in that the system comprises a data memory in which at least a part of the data of those objects, which momentarely result into a presentation on the screen, can be stored, that the system comprises means, accessible to a user for generating input signals which through a thereto destined process can be supplied to said part of the data of the objects stored in the data memory and that in case the input signals are related in a predetermined way to the data in said data memory the respective input signal is used to change to object data in a predetermined manner.

The means, accessible to a user for generating input signals can be embodied as a touch sensitive structure on the display unit. Such a touch sensitive structure can be realized by means of a number of infrared emitter detector combinations creating a grid of light beams, which are invisible to the human eye, directly in front of the screen of the display unit, or by means of a pressure sensitive transparant layer structure on the screen creating a grid of touch sensitive areas, etc. The realization of such a structure is considered as known to the expert in this field and for further details about these structures reference is made to the available literature.

The means accessible to the user for generating input signals also can be embodied in the form of one single switch respectively a number of switches or a mechanism for generating a continuously variable signal such as a rotary knob mechanism or a mechanism with a shift element. Also said switches and rotary knob or shifting element mechanisms are considered as known to the expert in this field and a further detailed discussion thereof is considered superfluous.

The invention will be explained in more detail with reference to the attached drawings.

Figure 1 illustrates the principle of a known system for controlling the display of an image on a display unit on the basis of object oriented software.

Figure 2 illustrates a system in which the invention is brought into practice.

Figure 3 illustrates another embodiment of a system in which the invention is brought into practice.

Figure 4 illustrates the image on the screen obtained amongst others with help of the object 5 in figure 2.

Figure 5 illustrates the image obtained amongst others with help of the object 9 in figure 3.

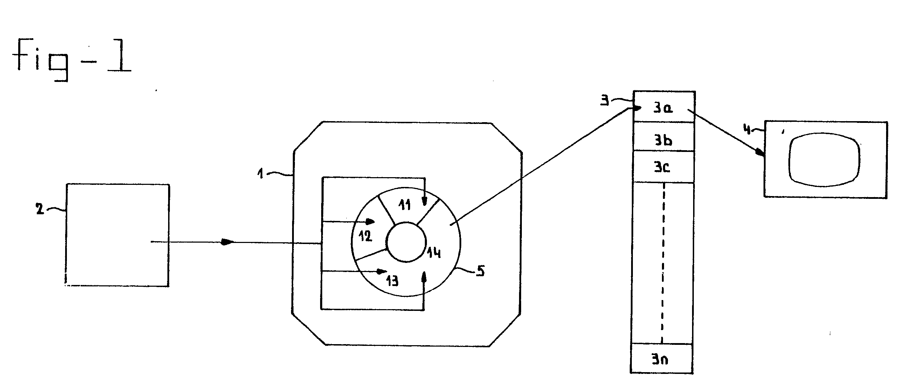

Figure 1 illustrates a known method for displaying objects on the screen of a display unit. A number of possible objects is predefined and stored in a working storage which is accessible to an application program 2. Under control of said application program 2 furthermore objects can be loaded from said working memory into a video memory 3 comprising a number of predefined memory sections 3a....3n. In his turn the video memory 3 is connected to the display unit 4.

For further details of object oriented software reference is made to the publication mentioned in the introductory part of this description. In relation therewith in the following only a short survey of the operation and functioning of the system in figure 1 will be presented.

The size of the memory sections 3a....3n is preferably selected such that each memory section can store sufficient data to present a complete picture on the screen of the unit 4. If each of these memory sections comprises enough data to present one complete picture on the screen of the unit 4 then it is only necessary for the application program to indicate which of those sections 3a....3n should be activated to obtain a predetermined picture on the screen. As is indicated in figure 1 the object 5 is loaded from the memory 1 under control of the application program 2 in the section 3a of the memory 3 and this object is, also under control of the application program 2, made visible onto the screen of the display unit 4.

In figure 1 the object 5 is schematically presented by means of a cicrle 10 representing an amount of data, surrounded by circle segments representing functions. The function 11 is destined to create the object and to reserve sufficient memory space to store the data 10. During the creation of the object data can be defined. On the other hand it is also possible to add or change data afterwards by means of the function 12. The function 13 makes it possible to delete an object completely. The purpose of the function 14 is to transfer all the data of an object to one of the sections 3a....3n of the video memory 3 under control of the application program 2.

A number of functions can be mutually combined such as for instance the functions 12 and 14. If by means of the function 12 data is changed than directly thereafter function 14 can take care of changing the presentation of the amended object on the screen 5.

The object 5 may comprise one complete picture or only a part of complete picture. If this object forms only a part of a complete picture then the section 3a of the memory 3 will store further objects besides this object 5 to obtain one complete picture.

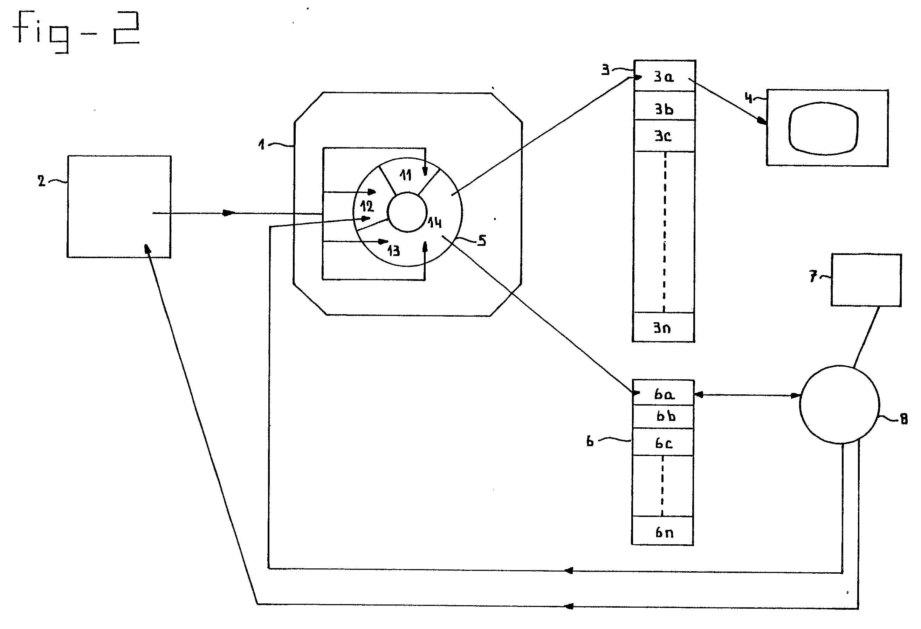

Figure 2 illustrates in which way in correspondence with the invention an object can changed using an input unit 7. The object 5 consists in the underlying example of a rectangle, to be projected on the screen with an enclosed text, as well as a touch sensitive area of a touch sensitive screen superimposed onto this rectangle (to create a touch sensitive screen for instance a grid of infrared emitter detector combinations as described in the US patents 3.860.754, 4.313.109 and 4.517.559 can be used. For further details reference is made to these publications). The data area 10 comprises in this case data about the length and the width of the rectangle, the colour of the rectangle, the coded text inside the rectangle and the colour of this text as well as information bits indicating whether the superimposed touch sensitive area is sensitized or not. Further data in the data area indicates if the respective touch sensitive area is momentarely touched by the user or not.

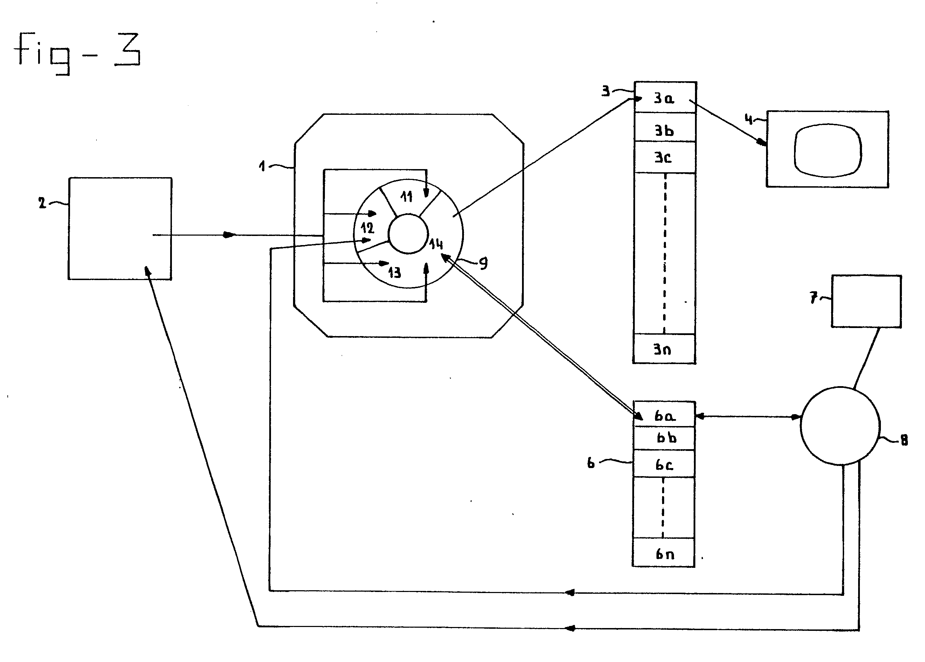

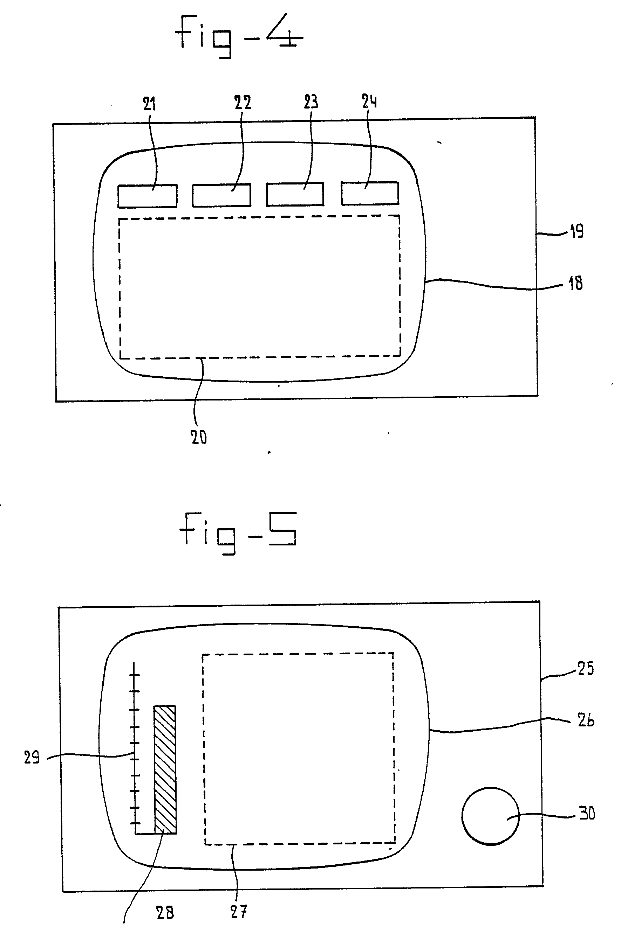

In figure 4 a display unit 9 with screen 18 is illustrated on which screen a complete picture is displayed. The part of the image within the frame 20 is not of interest. Above the frame 20 in this example four rectangles are displayed indicated by 21, 22, 23 and 24 in which eventually text can be displayed (which text is, however, not illustrated in the figure). Such rectangles together with thereon superimposed touch sensitive areas can be generated by means of an object 5.

Apart from the video memory 3 in figure 2 a further memory 6 is present, referred to as the common data memory. Also this memory is subdivided into a number of memory sections 6a....6n, also assigned to one of the corresponding memory sections 3a....3n of the video memory 3.

If under control of the application program 2 the object 5 (which can be a part of the total picture on the screen) is loaded in the section 3a of the video memory 3 than simultaneously the data relating to the corresponding touch sensitive area, i.e. the position and the size of this area, is loaded into the memory section 6a of the memory 6. The input unit 7 now receives signals from the touch sensitive structure present in front of the screen 4 and transmits the received signals to the reception process 8. A reception process 8 keeps track which of the sections of the video memory is momentarely active, in other words the contents of which section of the video memory is momentarely presented on the screen (in this case the data from section 3a) and at the reception of a signal from the input unit 7 accesses the corresponding memory section 6a to find out if the received input signal is related to the data stored in that section 6a of the memory 6. In the underlying example only correspondence is assumed with the data in the section 6a of the memory 6 in case indeed the touch sensitive section of the screen corresponding to the object 5 is activated because the user has touched this area.

If the reception process 8 in the above mentioned way comes to the conclusion that the touch sensitive area of object 5 is activated than a thereto related message is tranferred to the working memory 1 resulting into a change of the status information in the data area 10 from "not touched" to "touched". Furthermore the function 14 is used to transfer a data change to the video memory 3 resulting into a suitable change of the presented picture on the screen, for instance by changing the colour of the rectangle, by blinking the rectangle, etc. Furthermore the reception process 8 is able to transfer a message to the application program 2 informing this program that the related area of the screen is touched by the user. The application program could react for instance in such a way that after a predetermined period the status of the object 5 is changed again such that the touch sensitive area of object 5 is brought back from "touched" to "not touched" obtaining therewith again the initial situation.

Figure 3 illustrates a further development of the method according to the invention. In contrast to figure 2, in which the user activates a switching function (by pressing or touching the screen) figure 3 is related to an object by means of which a continuously variable parameter can be set, for instance using a rotary knob or a shift mechanism. Visually figure 3 is almost identical to figure 2 with the exception of a transfer route between the memory 6 and the object, which in this case is indicated by the reference 9 in this case.

The object 9 presents a continuously variable parameter on the screen 4, for instance in the form of a bar diagram, the bar of which has a variable length, a numerical value or a combination of both. The parameter of this bar diagram is stored in the data area 10 of the object. Furthermore also this object has a touch sensitive area the parameters of which are also stored in the data area 10.

Figure 5 illustrates as an example again a display unit 25 with a screen 26 whereon within the frame 27 information is presented which is not relevant to the invention. On one side of the frame 27 a bar diagram is presented comprising the actual bar 28 of which the length is variable and a verticle scaled axis 29. Furthermore the display unit 25 comprises a rotary knob 30 which can be operated by a user. As will be explained in the following paragraph by turning the rotary knob a variation in the length of bar 28 is obtained. Instead of a rotary knob of course a shift mechanism or another mechanism for supplying a continuously variable signal can be applied.

In the already described way the application program 2 takes care that the object 9 is displayed in the screen. The user is now has the possibility by means of the touch sensitive area to activate the continuously variable setting unit. As is described with reference to figure 2 the fact that this area is touched will be detected resulting into a change of the status data of the object 9. Thereafter the user is enabled by means of the variable setting unit to supply a continuously variable signal to the input unit 7 which transfers this signal to the reception process 8. The reception process 8 samples the variable input signal and transfers sampled data with predetermined intervals to the memory section 6a.

In this case the function 14 of the object 9 not only has to transport the object to the video memory, but also has to read continuously the memory section 6a. The sampled signal data found in that memory section, are used to adapt the image to present on the screen to the momentary input signals such that a changing picture on the screen 4 is obtained. This process is continued until the user indicates through a further switching function that the correct setting value of the variable is reached. This further switching function can be implimented again by means of a touch sensitive area which after setting of the variable has to be touched, but can also be implemented for instance by means of a separate switch, integrated within the rotary knob, or something similar for generating a separate switching signal. In response thereto the status data of the object 9 is changed from "active" to "non-active". The ultimate setting value is transferred by the process 8 to the application program 2 so that this program is enabled to take action. The ultimate setting value is furthermore by function 14 transferred to the data collection 10.

Claims

1. System for controlling the display of an image on a display unit, whereby an image to be displayed is composed of a number of objects, each consisting of a number of data determining at least a part of the image to be displayed as well as a number of procedures by means of which under control of an application program said data can be created, changed, deleted and supplied in presentable form to a video memory used for controlling the display unit,
characterized in that the system comprises a data memory in which at least a part of the data of those objects, which momentarely result into a presentation on the screen, can be stored, that the system comprises means, accessible to a user for generating input signals which through a thereto destined process can be supplied to said part of the data of the objects stored in the data memory and that in case the input signals are related in a predetermined way to the data in said data memory the respective input signal is used to change to object data in a predetermined manner.

2. System according to claim 1, characterized in, that the input signals are compared with the data in the data memory and that, in case a predetermined relationship is found, said process sends a predetermined message to the respective object to active at least one of the procedures influencing the data of the respective object.

3 System according to claim 2, characterized in that the system comprises a display unit with a screen, which is sensible to touch by a user, whereby the purpose of at least one of the objects is the presentation of a predetermined picture section on the screen of the display unit in combination with sensitizing a corresponding part of the touch sensitive structure of the display unit, which sensitized section forms a part of the means, accessible to the user for generating input signals.

4. System according to claim 3, characterized in that when the user touches said section of the touch sensitive structure said process transmits a message to the respective object resulting into a change of the object data without any assistance of the application program in such a manner, that as result thereof a changed section of the image is presented on the screen of the display unit.

5. System according to claim 3 or 4, characterized in that said process furthermore transmits a predetermined message to the application program in response whereto the application program after a predetermined period changes the respective object data as result whereof a changed presentation of the respective section of the image on the screen is obtained.

6. System according to claim 1, characterized in that the input signals are stored in the data memory and that at least one of said procedures reads those signals and changes therewith the object in a predetermined manner.

7. System according to claim 6, characterized in that the means, accessible to the user for generating input signals are embodied to deliver a continuously variable signal, which continuously variable signal is sampled by said process in a predetermined manner whereafter the signal samples are stored in the data memory.

8. System according to claim 7, characterized in that said means comprise a rotary knob of which the momentary position is translated into a corresponding analog signal.

9. System according to claim 7, characterized in that said means comprise a shift knob, the momentary position of which is translated into a corresponding analog signal.

10. System according to one of the preceding claims, characterized in that both said video memory as well as said further memory each are divided into a number of mutually related memory sections and that the receiving process keeps track which of those video sections is momentarely supplying information to the display screen to be able to determine with which corresponding section of the further memory eventual input signals have to be compared.

Fig-1

fig-2

EP 0 342 765 A1

Fig-3

EP 0 342 765 A1

Fig-4

Fig-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | PROC. OF THE 1ST INTERNATIONAL CONF. ON COMPUTER WORKSTATIONS, 11th-14th November 1985, pages 22-27, IEEE, New York, US; K.D. GOURLEY: "Object oriented input handling with RIOs" * Page 23, column 1, lines 36-43; figure 1 * | 1,2 | G 06 F 3/02<br>G 06 F 3/033<br>G 06 F 15/72 |
| A | PROC. OF THE 1ST INTERNATIONAL CONF. ON COMPUTER WORKSTATIONS, 11th-14th November 1985, pages 52-60, IEEE, New York, US; P. DEWAN et al.: "An approach to generalized editing" * Page 53, column 1, lines 10-20; page 56, column 2, lines 32-43 * | 1,2 | |
| A | US-A-4 635 208 (COLEBY et al.) * Column 4, line 60 - column 5, lines 4,29-32 * | 1,2 | |
| A | HEWLETT-PACKARD JOURNAL, vol. 35, no. 8, September 1984, pages 11-15, Amstelveen, NL; P.R. STRATON et al.: "The HP 150 touchscreen: An interactive user input device for a personal computer" * Page 13, column 2, lines 3-13; page 14, column 1, lines 6-9; figure 4 * | 3 | TECHNICAL FIELDS SEARCHED (Int. Cl.4)<br><br>G 06 F 15/72<br>G 06 F 3/033<br>G 06 F 3/023<br>G 06 F 15/60<br>G 06 K 11/06 |

The present search report has been drawn up for all claims

| Place of search | Date of completion of the search | Examiner |
|---|---|---|
| THE HAGUE | 23-08-1989 | GUINGALE A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P0401)